# EUROPÄISCHE PATENTSCHRIFT

(11) **EP 3 141 408 B1**
(45) Veröffentlichungstag und Bekanntmachung des Hinweises auf die Patenterteilung: **02.09.2020**
(21) Anmeldenummer: 16001965.9
(22) Anmeldetag: 09.09.2016
(51) Int. Cl.: B60G 7/00, B62D 35/02

(54) **RADFÜHRUNGSLENKER FÜR EIN KRAFTFAHRZEUG**
WHEEL-GUIDING STRUT FOR A MOTOR VEHICLE
BIELLE DE POUSSEE DE ROUE POUR UN VEHICULE AUTOMOBILE

(30) Priorität: 10.09.2015 DE 102015115227
(43) Veröffentlichungstag der Anmeldung: 15.03.2017
(73) Patentinhaber: Volkswagen Aktiengesellschaft, 38440 Wolfsburg (DE); Skoda Auto a.s., 293 60 Mlada Boleslav (CZ)
(72) Erfinder: Petzold, Rouven, 38124 Braunschweig (DE); Sumec, Michal, 82107 Bratislava (SK); Knothe, Ulrich, 38518 Gifhorn (DE)
(74) Vertreter: Beck, Michael Rudolf

(56) Entgegenhaltungen:
- DE-A1- 10 252 135
- DE-A1- 19 738 249
- DE-A1-102011 051 575
- DE-A1-102011 056 161
- DE-A1-102014 014 837
- DE-A1-102015 005 501
- DE-T2- 69 102 228
- DE-T2- 69 108 832
- JP-A- 2009 196 557
- US-A1- 2007 096 420
- US-B1- 6 810 586

## Beschreibung

Die Erfindung bezieht sich auf einen Radführungslenker für ein Kraftfahrzeug mit den Merkmalen des Oberbegriffs von Patentanspruch 1.

Bei Kraftfahrzeugen mit größerer Bodenhöhe, beispielsweise leichten Nutzkraftfahrzeugen, sind insbesondere in Bodennähe angeordnete Komponenten der Radaufhängung verstärkt einer Anströmung durch den Fahrtwind ausgesetzt und beeinflussen somit den Luftwiderstandbeiwert des Kraftfahrzeugs. Bei herkömmlichen Personenkraftfahrzeugen sind diese Komponenten überwiegend durch umliegende Bauteile vor einer unmittelbaren Anströmung geschützt, so dass dort diese Problematik weniger stark ausgeprägt ist.

Ein Radführungslenker der eingangs genannten Art ist aus DE 197 38 249 A1 bekannt. Dessen Tragwerksstruktur weist Formteile auf, welche innenliegende Rohrstreben umschließen und zum Zweck der Luftleitung in ihrer Form angepasst sind.

Weiterhin sind aus DE 10 2011 056 161 A1, JP 2009196557 A und US 2007/0096420 A1 Anbauteile bekannt, um die Anströmung in eine bestimmte Richtung zu leiten. DE 10 2011 056 161 A1 schlägt vor, einen Teilstrom zu den Radbremsen zu leiten, JP 2009196557 A schlägt vor, die Luft unter der Tragwerkstruktur abzuführen und US 2007/0096420 A1 rät dazu, ein nach unten offenes Profil durch ein Schließblech zu verschließen.

Der vorliegenden Erfindung liegt die Aufgabe zugrunde, mit einfachen Mitteln den durch eine Fahrzeugradaufhängung bewirkten Luftwiderstand eines Kraftfahrzeugs mit größerer Bodenhöhe zu verringern.

Diese Aufgabe wird durch einen Radführungslenker gemäß Patentanspruch 1 gelöst.

Mit der erfindungsgemäßen Lösung lässt sich mit sehr geringem Aufwand eine überraschend deutliche Verringerung des Luftwiderstandsbeiwerts eines Kraftfahrzeugs erzielen. Der Fahrtwind wird dabei sowohl über dem Radführungslenker als auch unter diesem vorbei geleitet, wobei die Bereiche abgelöster Strömung, welche den Luftwiderstand erhöhen würden, vermindert werden.

Die erfindungsgemäße Lösung eignet sich vor allem für Fahrzeuge, bei denen bauartbedingt einzelne Radführungslenker besonders exponiert in der Anströmung stehen.

Da die Luftleiteinrichtung eigens an der Tragwerkstruktur befestigt ist, ist es möglich, die Luftleiteinrichtung aus einem anderen Material als die Tragwerkstruktur herzustellen. Beispielsweise kann die Luftleiteinrichtung aus Kunststoff gefertigt werden, wohingegen die Tragwerkstruktur aus Metall besteht. Zudem ergibt sich hierdurch insbesondere in fertigungstechnischer Hinsicht ein großer Gestaltungsfreiraum für die Formgebung der Luftleiteinrichtung.

Vorteilhafte Ausgestaltungen der Erfindung sind Gegenstand weiterer Patentansprüche.

So kann beispielsweise die Tragwerkstruktur in einem der Luftleiteinrichtung in Anströmrichtung nachgelagerten Bereich, welcher an die Luftleiteinrichtung angrenzt, einen Profilquerschnitt in Fahrzeugquerrichtung aufweisen, welcher nach oben und unten geschlossen ist. Hierdurch werden im weiteren Verlauf der Umströmung der Tragwerkstruktur Strömungsablösungen und Verwirbelungen reduziert und der Luftwiderstandbeiwert weiter verbessert.

Gemäß einer vorteilhaften Ausgestaltung kann die Luftleiteinrichtung bei Betrachtung in Einbaulage in Fahrzeugquerrichtung im Profilquerschnitt eine in Vorwärtsfahrtrichtung vorspringende Wölbung aufweisen, welche kontinuierlich in den Verlauf einer nach oben weisenden Seitenwand der Tragwerkstruktur übergeht. Dies begünstigt vor allem den Strömungsverlauf über die nach oben weisende Seitenwand der Tragwerkstruktur hinweg.

In diesem Zusammenhang kann zur weiteren Verbesserung des Strömungsverhaltens die nach oben weisende Seitenwand der Tragwerkstruktur derart ausgebildet sein, dass diese in Vorwärtsfahrtrichtung zu der Luftleiteinrichtung hin in ihrer Bodenhöhe abfällt.

Gemäß einer weiteren vorteilhaften Ausgestaltung der Erfindung kann die Luftleiteinrichtung bei Betrachtung in Einbaulage in Fahrzeugquerrichtung im Profilquerschnitt mit ihrer Unterkante über eine nach unten weisende Seitenwand der Tragwerkstruktur überstehen, wobei der Überstand in Vertikalrichtung kleiner als 1/4 der Profilhöhe der Tragwerkstruktur im Übergang zu der Luftleiteinrichtung ist. Dadurch lässt sich bei einer entsprechend vorgegebenen Tragwerkstruktur der Luftwiderstand weiter reduzieren. Es ist auch möglich, einen solchen Überstand vollständig zu vermeiden, so dass die Wölbung der Luftleiteinrichtung wie an der nach oben weisenden Seitenwand kontinuierlich in eine nach unten weisende Seitenwand der Tragwerkstruktur übergeht.

Die Befestigung einer der separaten Luftleiteinrichtung kann grundsätzlich in beliebiger Art und Weise an der Tragwerkstruktur vorgenommen werden. Eine besonders vorteilhafte Möglichkeit besteht darin, die Luftleiteinrichtung mit der in Vorwärtsfahrtrichtung weisenden Flanke der Tragwerkstruktur zu verklipsen. Ein solches Verklipsen kann auch an anderer Stelle erfolgen. Beispielsweise ist es auch möglich, die Luftleiteinrichtung vor der in Vorwärtsfahrtrichtung weisenden Flanke anzuordnen und jeweils mit einer an dieser anschließenden nach oben weisenden Seitenwand und einer nach unten weisenden Seitenwand der Tragwerkstruktur zu verklipsen.

Nachfolgend wird die Erfindung anhand von in der Zeichnung dargestellten Ausführungsbeispielen näher erläutert. Die Zeichnung zeigt in:
- Figur 1: ein erstes Ausführungsbeispiel eines Radführungslenkers nach der vorliegenden Erfindung in Einbaulage an einem Kraftfahrzeug,
- Figur 2: eine räumliche Ansicht des Radführungslenkers aus Figur 1,
- Figur 3: eine Ansicht des Radführungslenkers aus Figur 1 in Blickrichtung auf die Luftleiteinrichtung,
- Figur 4: eine Darstellung der Anströmung ohne Luftleiteinrichtung,
- Figur 5: eine Darstellung der Anströmung des Radführungslenkers des ersten Ausführungsbeispiels mit Luftleiteinrichtung,
- Figur 6: eine räumliche Ansicht eines Radführungslenkers nach einem zweiten Ausführungsbeispiel, und in
- Figur 7: eine Ansicht des Radführungslenkers aus Figur 6 in Blickrichtung auf die Luftleiteinrichtung.

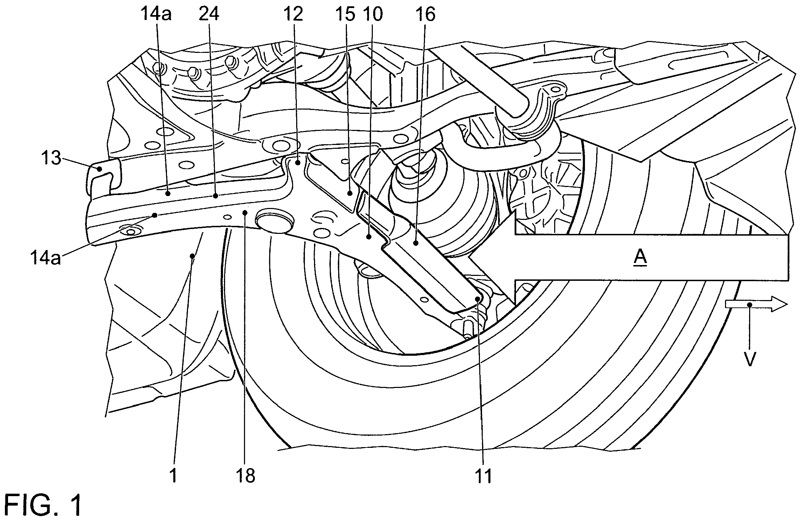

In Figur 1 ist ein erstes Ausführungsbeispiel eines erfindungsgemäßen Radführungslenkers 10 in Einbaulage an einem Kraftfahrzeug 1 dargestellt. Ein Radführungslenker stützt üblicherweise ein Rad eines Kraftfahrzeugs gegen dessen Aufbau ab. Soweit in der nachfolgenden Beschreibung des Radführungslenkers 10 Begriffe wie oben, unten, vorn, hinten oder quer verwendet werden, sind diese jeweils auf die übliche und bestimmungsgemäße Einbaulage am Kraftfahrzeug bezogen zu verstehen.

Insbesondere bodennah angeordnete Radführungslenker 10 können der Anströmung A durch den Fahrtwind ausgesetzt sein und damit den Luftwiderstandsbeiwert eines Kraftfahrzeugs ungünstig beeinflussen.

Bei dem dargestellten ersten Ausführungsbeispiel ist der Radführungslenker 10 beispielhaft als Dreiecksquerlenker dargestellt. Jedoch lassen sich die nachfolgenden Erläuterungen gleichermaßen auch auf andere Typen von Radführungslenkern übertragen.

Der Radführungslenker 10 des ersten Ausführungsbeispiels umfasst dementsprechend mindestens eine radseitige Anbindungsstelle 11 und eine oder mehrere, vorliegend zwei aufbauseitige Anbindungsstellen 12 und 13. Diese Anbindungsstellen 11, 12 und 13 sind durch eine Tragwerkstruktur 14 miteinander verbunden.

Die Tragwerkstruktur 14 ist vorliegend zweischalig ausgebildet und umfasst ein oberes Schalenelement 14a und ein unteres Schalenelement 14b, welche miteinander verbunden sind und einen Hohlraum umschließen. Jedoch ist auch eine andersartige Ausgestaltung der Tragwerkstruktur 14 möglich.

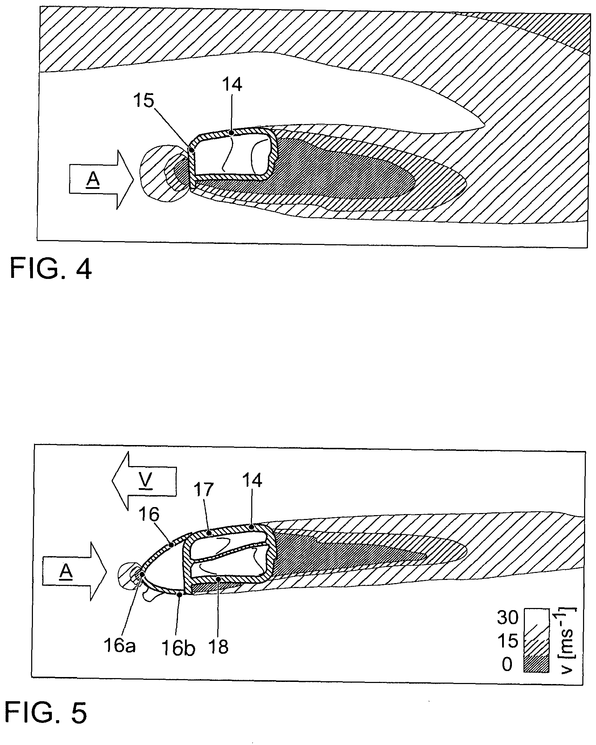

Generell weist die Tragwerkstruktur 14 jedoch eine in Vorwärtsfahrtrichtung V weisenden Flanke 15 auf, welche in der Anströmung A liegt. An dieser Flanke ist eine Luftleiteinrichtung 16 vorgesehen, welche derart konfiguriert ist, um gleichzeitig einen Teil der Anströmung A des Radführungslenkers 10 über die Tragwerkstruktur 14 hinweg und einen Teil der Anströmung unter der Tragwerkstruktur 14 hindurch zu leiten, wie dies in Figur 5 zu erkennen ist. Die auf den Radführungslenker 10 auftreffende Luft wird somit durch die in Vorwärtsfahrtrichtung V an dem Radführungslenker 10 vorliegende Luftleiteinrichtung 16 sowohl oberhalb als auch unterhalb des Radführungslenkers 10 vorbei geleitet. Über die Profilierung der Luftleiteinrichtung 16 kann der Anteil der Anströmung, welcher über den Radführungslenker 10 geführt wird, und der Anteil, welcher unter dem Radführungslenker 10 hindurchgeführt wird, eingestellt werden.

Wie einem Vergleich der Figuren 4 und 5 ohne und mit Luftleiteinrichtung 16 entnommen werden kann, bewirkt die Luftleiteinrichtung 16 eine deutliche Verringerung von Bereichen mit abgelöster Strömung und damit eine geringere Verwirbelung der Strömung entlang und hinter dem Radführungslenker 10, wodurch sich für den Radführungslenker 10 mit Luftleiteinrichtung 16 ein deutlich reduzierter Luftwiderstand ergibt.

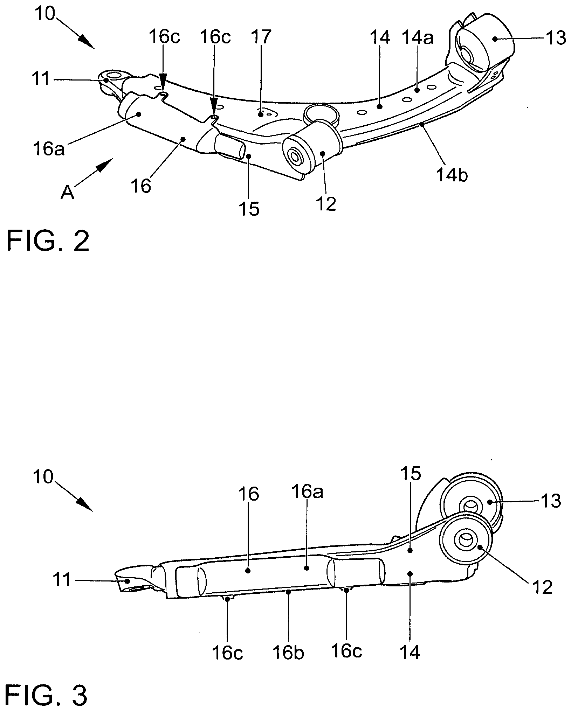

Für die Umströmung des Radführungslenkers ist es ferner von Vorteil, wenn dessen Tragwerkstruktur 14 nicht mit einem offenen Profilquerschnitt ausgeführt wird. Wie den Figuren 1 und 2 entnommen werden kann, ist die Tragwerkstruktur 14 vorliegend mit einem weit überwiegend geschlossenen Profilquerschnitt ausgebildet. Die Tragwerkstruktur 14 weist dementsprechend an die Flanke 15 anschließende obere und untere Seitenwände 17 und 18 auf. Zumindest in einem der Luftleiteinrichtung 16 in Anströmrichtung nachgelagerten Bereich, welcher an die Luftleiteinrichtung 16 angrenzt, sollte der Profilquerschnitt der Tragwerkstruktur 14 in Fahrzeugquerrichtung nach oben und unten geschlossen sein.

Figur 5 ist weiter zu entnehmen, dass die Luftleiteinrichtung 16 bei Betrachtung in Einbaulage in Fahrzeugquerrichtung im Profilquerschnitt eine in Vorwärtsfahrtrichtung vorspringende Wölbung 16a aufweist, welche kontinuierlich in den Verlauf der nach oben weisenden Seitenwand 17 der Tragwerkstruktur übergeht.

Zudem kann die nach oben weisende Seitenwand 17 der Tragwerkstruktur 14 in Vorwärtsfahrtrichtung V zu der Luftleiteinrichtung 16 hin in ihrer Bodenhöhe abfallen.

Bei dem dargestellten Ausführungsbeispiel steht die Luftleiteinrichtung 16 bei Betrachtung in Einbaulage in Fahrzeugquerrichtung im Profilquerschnitt (vgl. Figur 5) mit ihrer Unterkante 16b über die nach unten weisende Seitenwand 18 der Tragwerkstruktur 14 etwas vor. Der Überstand der Unterkante 16b ist jedoch verhältnismäßig gering und beträgt in Vertikalrichtung maximal 1/4 der Profilhöhe der Tragwerkstruktur 14 im Übergang zu der Luftleiteinrichtung 16. Wie ein Vergleich mit Figur 4 zeigt, wird hierdurch das Strömungsverhalten unter dem Radführungslenker 10 verbessert. Ein solcher Überstand kann jedoch auch vollständig entfallen, so dass sich wie an der oberen Seitenwand 17 auch zu der unteren Seitenwand 18 hin ein kontinuierlicher und damit sprungfreier Übergang ergibt.

Bei dem ersten Ausführungsbeispiel ist die Luftleiteinrichtung 16 an der Tragwerkstruktur 14 befestigt, wodurch für diese ein großer Gestaltungsfreiraum zur Verfügung steht. Zudem kann die Luftleiteinrichtung aus einem anderen Werkstoff als die Tragwerkstruktur gefertigt werden. Insbesondere ist es möglich, die Luftleiteinrichtung 16 als Kunststoffbauteil auszuführen. Letzteres ist vorliegend mit der Tragwerkstruktur 14 verklipst. Jedoch können auch andere Befestigungstechniken zum Einsatz kommen.

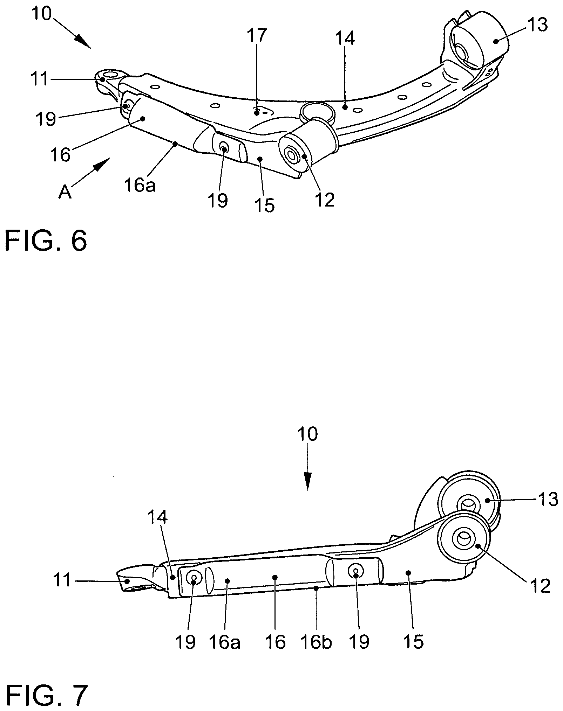

Wie insbesondere den Figuren 2 und 3 entnommen werden kann, können an die Luftleiteinrichtung 16 Laschen 16c angeformt sein, welche mit der oberen Seitenwand 17 und der unteren Seitenwand 18 der Tragwerkstruktur 14 verrasten. In einem zweiten Ausführungsbeispiel, welches in den Figuren 6 und 7 dargestellt ist, ist die Luftleiteinrichtung 16 mit der in Vorwärtsfahrtrichtung weisenden Flanke 15 der Tragwerkstruktur 15 verklipst. Die Verklipsung 19 befindet sich in diesem Fall in Fahrzeugquerrichtung seitlich neben der in Vorwärtsfahrtrichtung vorspringenden Wölbung 16a. Wie bereits ausgeführt, kann jedoch eine Befestigung grundsätzlich auch auf andere Art und Weise vorgenommen sein.

Die Erfindung wurde vorstehend anhand von Ausführungsbeispielen und weiteren Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und Abwandlungen beschränkt, sondern umfasst alle durch die Patentansprüche definierten Ausgestaltungen.

### Bezugszeichenliste

- 1: Kraftfahrzeug
- 10: Radführungslenker
- 11: radseitige Anbindungsstelle
- 12: aufbauseitige Anbindungsstellen
- 13: aufbauseitige Anbindungsstellen
- 14: Tragwerkstruktur
- 14a: oberes Schalenelement
- 14b: unteres Schalenelement
- 15: Flanke
- 16: Luftleiteinrichtung
- 16a: Wölbung
- 16b: Unterkante
- 16c: Lasche
- 17: nach oben weisende Seitenwand
- 18: nach unten weisende Seitenwand
- 19: Verklipsung
- A: Anströmung
- V: Vorwärtsfahrtrichtung

### Bezugszeichenliste

- 1: Kraftfahrzeug
- 10: Radführungslenker
- 11: radseitige Anbindungsstelle
- 12: aufbauseitige Anbindungsstellen
- 13: aufbauseitige Anbindungsstellen
- 14: Tragwerkstruktur
- 14a: oberes Schalenelement
- 14b: unteres Schalenelement
- 15: Flanke
- 16: Luftleiteinrichtung
- 16a: Wölbung
- 16b: Unterkante
- 16c: Lasche
- 17: nach oben weisende Seitenwand
- 18: nach unten weisende Seitenwand
- 19: Verklipsung
- A: Anströmung
- V: Vorwärtsfahrtrichtung

## Patentansprüche

1. Radführungslenker (10) für ein Kraftfahrzeug, umfassend:
mindestens eine radseitige Anbindungsstelle (11) und eine oder mehrere aufbauseitige Anbindungsstellen (12,13) sowie eine diese Anbindungsstellen (11, 12,13) verbindende Tragwerkstruktur (14), und eine Luftleiteinrichtung (16), welche derart konfiguriert ist, um gleichzeitig einen Teil der Anströmung des Radführungslenkers (10) über die Tragwerkstruktur (14) und einen Teil der Anströmung unter der Tragwerkstruktur (14) hindurch zu leiten,
**dadurch gekennzeichnet, dass**
die Tragwerkstruktur (14) eine in Vorwärtsfahrtrichtung weisende Flanke (15) sowie eine an diese Flanke (15) anschließende obere Seitenwand (17) und eine an diese Flanke (15) anschließende untere Seitenwand (18) aufweist, um einen überwiegend geschlossenen Profilquerschnitt auszubilden, und
die Luftleiteinrichtung (16) als separates Bauteil an der in Vorwärtsfahrtrichtung weisenden Flanke (15) der Tragwerkstruktur (14) angeordnet und an der Tragwerkstruktur (14) befestigt ist.

2. Radführungslenker nach Anspruch 1, **dadurch gekennzeichnet, dass** die Tragwerkstruktur (14) in einem der Luftleiteinrichtung (16) in Anströmrichtung nachgelagerten Bereich, welcher an die Luftleiteinrichtung (16) angrenzt, einen Profilquerschnitt in Fahrzeugquerrichtung aufweist, welcher nach oben und unten geschlossen ist.

3. Radführungslenker nach Anspruch 1 oder 2, **dadurch gekennzeichnet, dass** die Luftleiteinrichtung (16) bei Betrachtung in Einbaulage in Fahrzeugquerrichtung im Profilquerschnitt eine in Vorwärtsfahrtrichtung vorspringende Wölbung (16a) aufweist, welche kontinuierlich in den Verlauf einer nach oben weisenden Seitenwand (17) der Tragwerkstruktur (14) übergeht.

4. Radführungslenker nach Anspruch 3, **dadurch gekennzeichnet, dass** die nach oben weisende Seitenwand (17) der Tragwerkstruktur (14) in Vorwärtsfahrtrichtung (V) zu der Luftleiteinrichtung (16) hin in ihrer Bodenhöhe abfällt.

5. Radführungslenker nach einem der Ansprüche 1 bis 4, **dadurch gekennzeichnet, dass** die Luftleiteinrichtung (16) bei Betrachtung in Einbaulage in Fahrzeugquerrichtung im Profilquerschnitt mit ihrer Unterkante (16b) über eine nach unten weisende Seitenwand (18) der Tragwerkstruktur (14) übersteht, wobei der Überstand in Vertikalrichtung kleiner als 1/4 der Profilhöhe der Tragwerkstruktur (14) im Übergang zu der Luftleiteinrichtung (16) ist.

6. Radführungslenker nach Anspruch einem der Ansprüche 1 bis 5, **dadurch gekennzeichnet, dass** die Luftleiteinrichtung (16) mit der in Vorwärtsfahrtrichtung weisenden Flanke (15) der Tragwerkstruktur (14) verklipst ist.

7. Radführungslenker nach einem der Ansprüche 1 bis 6, **dadurch gekennzeichnet, dass** die Luftleiteinrichtung (16) vor der in Vorwärtsfahrtrichtung weisenden Flanke (15) angeordnet und jeweils mit einer an dieser anschließenden nach oben weisenden Seitenwand (17) und einer nach unten weisenden Seitenwand (18) der Tragwerkstruktur (14) verklipst ist.

## Claims

1. Wheel-guiding suspension arm (10) for a motor vehicle, comprising:
at least one wheel-side connecting point (11) and one or more assembly-side connecting points (12, 13) as well as a supporting structure (14) connecting these connecting points (11, 12, 13), and an air guiding device (16) which is configured to simultaneously guide a part of the incoming flow on the wheel-guiding suspension arm (10) over the supporting structure (14) and a part of the incoming flow under the supporting structure (14),
**characterized in that**
the supporting structure (14) has a flank (15) pointing in the forward direction of travel as well as an upper side wall (17) which adjoins this flank (15) and a lower side wall (18) which adjoins this flank (15) in order
to form a predominantly closed profile cross-section, and
the air guiding device (16) is arranged as a separate component on the flank (15) of the supporting structure (14) and fastened to the supporting structure (14), said flank (15) pointing in the forward direction of travel.

2. Wheel-guiding suspension arm according to claim 1, **characterized in that** the supporting structure (14) has, in a region downstream of the air guiding device (16) in the incoming flow direction and adjacent to the air guiding device (16), a profile cross-section in the transverse direction of the vehicle which is closed upwardly and downwardly.

3. Wheel-guiding suspension arm according to claim 1 or 2, **characterized in that**, when viewed in the installation position in the transverse direction of the vehicle in the profile cross-section, the air guiding device (16) has a curvature (16a) which projects in the forward direction of travel and merges continuously into the course of an upward-pointing side wall (17) of the supporting structure (14).

4. Wheel-guiding suspension arm according to claim 3, **characterized in that** the height above ground of the upward-pointing side wall (17) of the supporting structure (14) decreases toward the air guiding device (16) in the forward direction of travel (V).

5. Wheel-guiding suspension arm according to any of claims 1 to 4, **characterized in that**, when viewed in the installation position in the transverse direction of the vehicle in the profile cross-section, the lower edge (16b) of the air guiding device (16) projects beyond a downward-pointing side wall (18) of the supporting structure (14), wherein the projection in the vertical direction is less than 1/4 of the profile height of the supporting structure (14) where it transitions to the air guiding device (16).

6. Wheel-guiding suspension arm according to any of claims 1 to 5, **characterized in that** the air guiding device (16) is clipped to the flank (15) of the supporting structure (14), which flank points in the forward direction of travel.

7. Wheel-guiding suspension arm according to any of claims 1 to 6, **characterized in that** the air guiding device (16) is arranged in front of the flank (15) pointing in the forward direction of travel and is clipped to an adjacent upward-pointing side wall (17) and a downward-pointing side wall (18) of the supporting structure (14), respectively.

## Revendications

1. Bielle de poussée de roue (10) pour un véhicule automobile, comprenant :
au moins un point de raccordement (11) côté roue et un ou plusieurs points de raccordement (12, 13) côté carrosserie, ainsi qu'une structure de support (14) raccordant ces points de raccordement (11, 12, 13) et un dispositif de guidage d'air (16), qui est conçu de manière à guider simultanément une partie de l'afflux de la bielle de poussée de roue (10) au-dessus de la structure de support (14) et une partie de l'afflux au-dessous de la structure de support (14),
**caractérisée en ce que**
la structure de support (14) présente un flanc (15) orienté dans la direction d'avance, ainsi qu'une paroi latérale supérieure (17) se raccordant audit flanc (15) et une paroi latérale inférieure (18) se raccordant audit flanc (15), afin de former une section transversale de profil principalement fermée et
le dispositif de guidage d'air (16) est disposé en tant que composant séparé sur le flanc (15) orienté dans la direction d'avance de la structure de support (14) et est fixé à la structure de support (14).

2. Bielle de poussée de roue selon la revendication 1, **caractérisée en ce que** la structure de support (14) présente, dans une zone en aval dans la direction d'afflux par rapport au dispositif de guidage d'air (16), qui jouxte le dispositif de guidage d'air (16), une section transversale de profil dans la direction perpendiculaire du véhicule, qui est fermée vers le haut et vers le bas.

3. Bielle de poussée de roue selon la revendication 1 ou 2, **caractérisée en ce que** le dispositif de guidage d'air (16) présente, vu dans la position de montage dans la direction transversale du véhicule, une courbure (16a) en saillie dans la direction d'avance qui passe de manière continue au tracé d'une paroi latérale orientée vers le haut (17) de la structure de support (14).

4. Bielle de poussée de roue selon la revendication 3, **caractérisée en ce que** la hauteur de fond de la paroi latérale (17) orientée vers le haut de la structure de support (14) diminue dans la direction d'avance (V) vers le dispositif de guidage d'air (16).

5. Bielle de poussée de roue selon l'une quelconque des revendications 1 à 4, **caractérisée en ce que** le dispositif de guidage d'air (16), vu dans la position de montage dans la direction transversale du véhicule, dépasse, en section transversale de profil, avec son arête inférieure (16b) au-dessus d'une paroi latérale (18) orientée vers le bas de la structure de support (14), le dépassement étant, dans la direction verticale, inférieur à 1/4 de la hauteur de profil de la structure de support (14) dans la transition vers le dispositif de guidage d'air (16).

6. Bielle de poussée de roue selon l'une quelconque des revendications 1 à 5, **caractérisée en ce que** le dispositif de guidage d'air (16) est clipsé avec le flanc (15) orienté dans la direction d'avance de la structure de support (14).

7. Bielle de poussée de roue selon l'une quelconque des revendications 1 à 6, **caractérisée en ce que** le dispositif de guidage d'air (16) est disposé devant le flanc (15) orienté dans la direction d'avance et est clipsé respectivement avec une paroi latérale (17) orientée vers le haut se raccordant à celui-ci et avec une paroi latérale (18) orientée vers le bas de la structure de support (14).
